# EUROPEAN PATENT APPLICATION

(11) **EP 0 778 185 A1**
(43) Date of publication of application: **11.06.1997**
(21) Application number: 96119073.3
(22) Date of filing: 28.11.1996
(51) Int. Cl.: B60R 25/10

(54) **An anti-theft system, particularly for motor vehicles**

(30) Priority: 06.12.1995 IT TO950972
(71) Applicant: MAGNETI MARELLI S.p.A., 20145 Milano (IT)
(72) Inventor: Blazic, Oscar, 10057 Sant'Ambrogio (Torino) (IT); Negro, Luciano, 10046 Poirino (Torino) (IT); Ghisio, Guido, 10090 Rosta (Torino) (IT)
(74) Representative: Quinterno, Giuseppe

(57) **Abstract**

The anti-theft system (10) comprises an acoustic indicator for generating an alarm signal, a control unit (12, 32) for activating this indicator (11) upon the occurrence of predetermined conditions detected by sensors (14), and reprogrammable memory devices (26) operable to store a disablement time interval. The control unit (12, 32) can be conditioned by the memory devices (26) to disable the acoustic indicator (11) during the stored disablement time interval.

## Description

The present invention relates to an electronic anti-theft system, particularly for motor vehicles, comprising an acoustic indicator which can be activated for the generation of alarm signals, and control means for activating the acoustic indicator upon the occurrence of predetermined conditions detected by sensors associated with the said control means.

Electronic anti-theft systems represent a deterrent against the theft of motor vehicles. They operate by generating an acoustic, and possibly also an optical signal in the case of attempts to break in or steal a motor vehicle, or upon the occurrence of shocks of a certain magnitude to which the motor vehicle may be subjected.

Such systems can however sometimes become activated even by events not associated with attempts at breaking and entering or theft and which are not likely to cause real damage to the motor vehicle. This can occur for example following atmospheric electrical discharges and/or vibrations due to intense traffic or to knocks or impacts of modest magnitude.

In such circumstances the anti-theft system can actually constitute a source of acoustic pollution and be a considerable nuisance, especially at night and in urban centres where the density of motor vehicles is higher and therefore the risk of false alarms is greater.

The object of the invention is to provide an electronic anti-theft system able to allow such disadvantages to be overcome.

This object is achieved with the anti-theft system according to the invention which is principally characterised by the fact that it comprises reprogrammable memory means able to store a disablement time interval, and by the fact that the control means can be conditioned by the said memory means to disable the acoustic indicator during the stored disablement time interval.

Further characteristics and advantages of the invention will become apparent from the following detailed description given purely by way of non-limitative example with reference to the attached drawings, in which:
Figure 1 is a general block diagram of an anti-theft system for motor vehicles according to the invention; and
Figure 2 is an alternative embodiment of the anti-theft system of Figure 1.

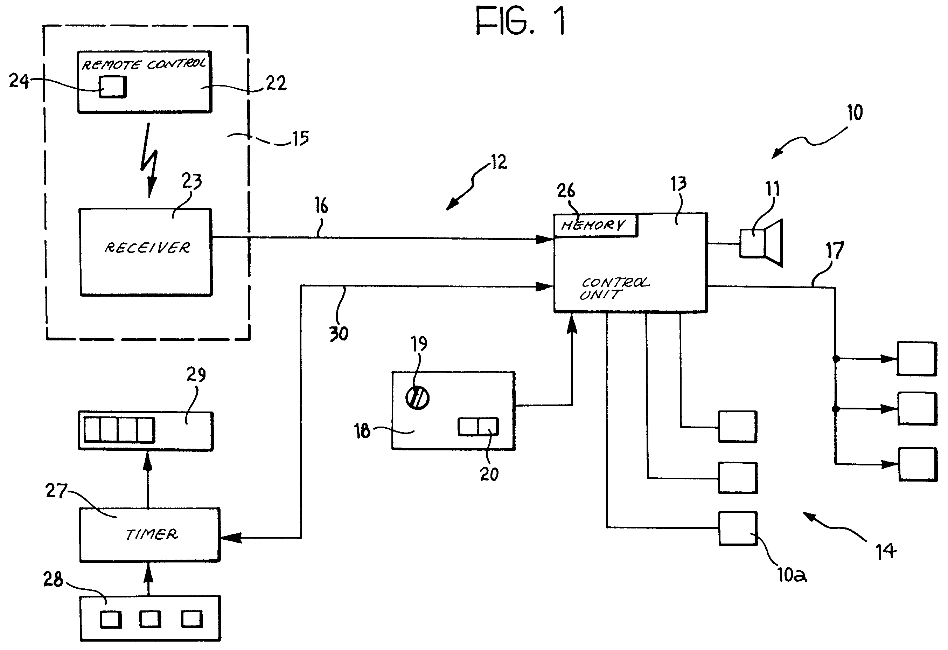

With reference to Figure 1, an anti-theft system according to the invention, generally indicated 10, comprises an acoustic alarm indicator (siren) 11 and control means 12 for activating this indicator upon the occurrence of predetermined conditions detected by sensors 14.

The anti-theft system 10 is supplied from the electrical installation on board the motor vehicle but can be conveniently provided with its own buffer battery operable to maintain the system active even in the case of its disconnection from the main battery of the installation on board the motor vehicle.

The control means 12 comprise an electronic control unit 13, the sensors 14 and control/arming devices 15. The control means 12 are arranged to activate the siren 11 for the generation of an acoustic alarm signal when they are enabled (that is to say when the system has been armed) and when the sensors 14 detect the occurrence of a predetermined condition such as the opening of one or more doors or the bonnet or boot of the motor vehicle, an intrusion into the passenger compartment, violent shocks etc.

The control unit 13 is connected to the siren 11 with which it can form a "compact" unit, and is connected to the arming devices 15 by means of a communication line 16, for example of serial type. The unit 13 is also arranged to provide control signals on a line 17 for controlling the closure and opening of the door locks and for activation to illuminate one or more of the motor vehicle's indicator lamps upon activation and disactivation of the system in a manner known per sé.

The unit 13 can be associated with a module 18 including a manually operable switch 19, operable for example by means of a key, to enable/disable the entire system and possible pre-setting selectors 20 for accessory functions.

The unit 13 can include a microprocessor with volatile and non-volatile ROM and RAM memories for control of the sensors and the other circuit devices connected to it.

The unit 13 can also include pre-setting means for setting the manner of activation of the siren 11 according to which of the sensors 14 indicates an attempt at entry/intrusion and other particular circumstances. By way of example the manner of activation can provide a variable number of alarm signal periods each for example of several minutes separated by intervals of predetermined duration in a manner known per sé to the man skilled in the art.

The control/arming devices 15 may include a remote control device 22 and at least one receiver 23. The remote control device 22 has at least one key (or other similar member) 24 manually operable to send coded signals to the receiver 23, via radio or infra-red rays, for activating/disactivating the system. This receiver 23 is connected to the control unit 13. The unit 13 can also include delay devices operable (for example) to delay the activation of the system for a predetermined time to allow, for example, the user to leave and close the motor vehicle.

According to the invention the anti-theft system 10 includes memory devices 26 for storing data defining a disablement time interval. These devices are conveniently of non-volatile type and integrated in the unit 13.

The control unit 13 can be conditioned by data stored in the memory 26 to disable the activation of the alarm siren 11 in the stored disablement time interval. For this purpose the control unit 13 is connected to a timing device 27 operable to provide it with information indicative of the current time (for example hours and minutes). The unit 13 is arranged to allow enablement of the siren 11 only outside the time interval stored in the memory 26.

The timer 27 has a period of 24 hours and is provided with manual adjustment members 28 for updating the current time, and a display 29. The timer 27 also acts as a clock and is arranged to transmit information on the current time to the unit 13 by means of a line 30, for example of serial type.

The timer 27 can be constituted by the possible clock mounted on the motor vehicle, suitably arranged or modified for the transmission of information on the current time to the unit 13.

The unit 13 is arranged to acquire the information from the timer 27 and temporarily to disable the activation of the siren 11 in accordance with the disablement time interval memorised in the memory 26.

Other functions of the anti-theft system relating for example to the immobilisation of the operation of the engine, and locking of the doors, remain however enabled, even in the siren disablement time interval.

In a first operating mode the unit 13 can be arranged to acquire data on the current time provided by the timer 27 in an asynchronous manner and to compare the current time with the memorised disablement time interval.

In a second operative mode the control unit 13 is arranged to read the memorised disablement time interval and to acquire the current time from the timer 27 only upon reception (by means of the line 16) of an anti-theft system activation request from the remote control device 22. The unit 13 then holds within its interior the count of the current time and arranges enablement of the siren 11 only when the system activation request falls outside the disablement interval.

In both operative modes the user acts as with an anti-theft system of known type. For example, if the set and tored disablement interval lies between the hours of 10.00 pm and 7.00 am an operation of the remote control device 22 at 7.30 pm causes immediate arming of the anti-theft system, but the operation of the siren is automatically disabled at 10.00 pm and is then re-enabled at 7.01 am with a cyclic repetition every 24 hours if the motor vehicle is left for more than the first 24 hours.

If on the other hand the user actuates the remote control device at 10.30 pm the anti-theft system is armed but the siren 11 remains disabled until the next 7.00 am. The siren 11 is then re-enabled at 7.01 am as in the preceding case.

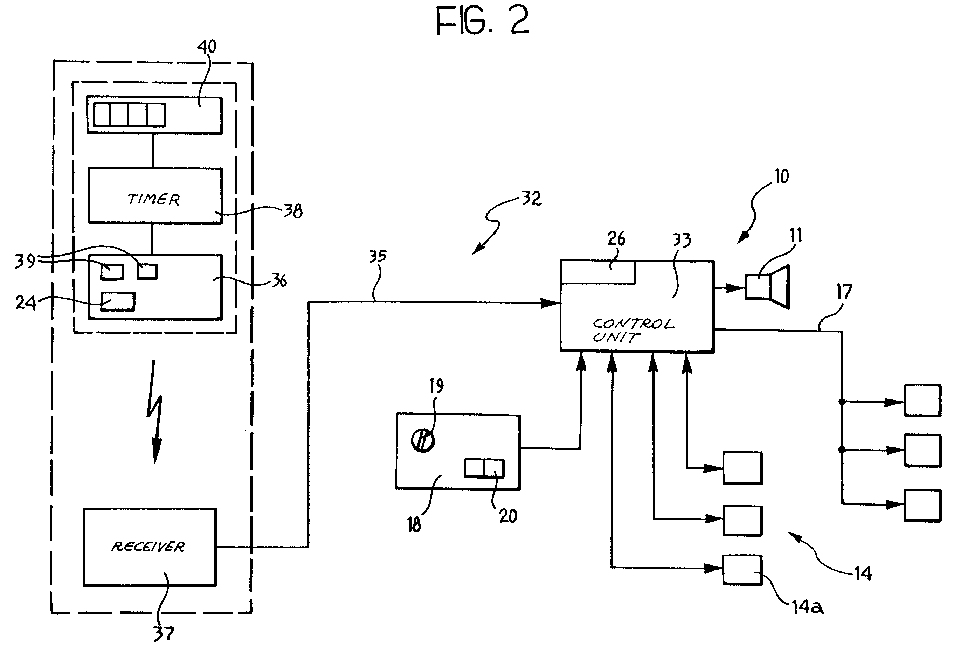

In Figure 2 is shown an alternative embodiment of the anti-theft system. In this Figure the parts already described with reference to Figure 1 have again been attributed the same reference numerals previously utilised.

The control unit 33 of Figure 2 is arranged to acquire data only from the control/arming devices indicated 34, by means of a serial communication line 35.

The control/arming devices 34 include a remote control device 36 and a receiver device 37. The remote control device 36 is associated with a timer 38 having a clock function with adjustment members 39 for updating the current time, and an associated display 40 for displaying the current hour and minutes. The remote control 36 is integrated with the timer 38 and the display 40 in a single portable container.

The remote control 36 can be activated for example by means of a key 24 to emit signals indicative of the current time and the request for activation of the system. The receiver 37 is arranged to detect the signals emitted by the remote control device and to transmit the associated information to the control unit 33 through the line 35. The unit 33 is arranged to synchronise its internal clock updating it to the current time indicated by the received signals for subsequently comparing it with the contents of the memory 26.

The system according to Figure 2 is also arranged for anti-theft operation to be activated when it receives an activation request from the remote control 36 but the enablement of the siren is actuated only outside the (possibly) memorised disablement interval.

It is clear that the anti-theft system as described above can have numerous variations introduced thereto without departing from the ambit of the invention. By way of example the disablement of the acoustic indicator 11 can be arranged by means of switching means associated with the unit 13 or 33 upstream of the siren 11.

Naturally, the principle of the invention remaining the same, the embodiments and details of construction can be widely varied with respect to what has been described and illustrated purely by way of non-limitative example, without by this departing from the ambit of the present invention as defined in the annexed Claims.

## Claims

1. An electronic anti-theft system (10), particularly for motor vehicles, comprises an acoustic alarm indicator which can be activated to generate alarm signals, and control means (12, 32) arranged to activate the said indicator (11) upon the occurrence of predetermined conditions detected by sensors (14) associated with the said control means (12, 32);
characterised in that it further includes reprogrammable memory means (26) operable to store a disablement time interval, and in that the control means (12, 32) can be conditioned by the memory means (26) to disable the acoustic indicator (11) during the stored disablement time interval.

2. An alarm system according to Claim 1, characterised in that it includes a timer (27; 38) serving as a clock and operable to send information indicative of the current time to the said control means (12, 32).

3. An alarm system according to Claim 2, characterised in that the said timer (27; 38) is provided with manually operable adjustment members (28, 39) for updating the current time, and a display (29, 40) for displaying the current time.

4. An alarm system according to Claim 2 or Claim 3, characterised in that the said timer (27) is constituted by a clock installed on board the motor vehicle.

5. An alarm system according to any of Claims 2, 3 or 4, characterised in that the said control means comprise an electronic unit (13; 33) operable to compare the stored disablement interval with the current time, and arranged to generate a corresponding acoustic indicator disablement signal for disabling the acoustic indicator (11).

6. An alarm system according to any of Claims 2, 3 or 4, characterised in that the control means (12, 32) include means for generating clock signals and are arranged to acquire information on the current time from the timer (27) only upon operation of a request for arming the anti-theft system, and for holding the count of the time and arranging enablement of the acoustic indicator (11) when the current time falls outside the stored disablement interval.

7. An alarm system according to any of Claims 2 to 6, characterised in that the said timer (27) is connected to the said control means (13) by means of a serial line (30).

8. An alarm system according to Claim 2, including a remote control device (36) operable to send control signals for arming the anti-theft system (10) to a receiver device (37);
characterised in that the said timer (38) is integrated in the said remote control device (36) and can be activated to send signals indicative of the current time to the said receiver device (37).

9. An alarm signal according to Claim 8, characterised in that the remote control device (36) includes adjustment members (39) for updating the current time, and a display (40) for displaying the current time.

10. An anti-theft system according to any preceding Claim, in which the control means (13, 33) are arranged to control, in a predetermined manner, interdiction devices operable to prevent the use of the motor vehicle;
characterised in that the said control means (13, 33) are arranged to activate the control of the said interdiction devices even during the said disablement interval.
